(19) Europäisches Patentamt / European Patent Office / Office européen des brevets

(11) **EP 4 534 950 A1**

(12) **EUROPEAN PATENT APPLICATION**

(43) Date of publication:
09.04.2025 Bulletin 2025/15

(21) Application number: 24203918.8

(22) Date of filing: 01.10.2024

(51) International Patent Classification (IPC):
**G01B 9/02004** (2022.01)  **G01B 9/02015** (2022.01)
**G01B 9/02056** (2022.01)  **G01B 11/02** (2006.01)

(52) Cooperative Patent Classification (CPC):
**G01B 9/02004; G01B 9/02027; G01B 9/02028;**
**G01B 9/02057; G01B 11/026;** G01B 2290/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 05.10.2023 JP 2023173505

(71) Applicant: **OMRON Corporation**
**Shiokoji-dori, Shimogyo-ku**
**Kyoto-shi**
**Kyoto 600-8530 (JP)**

(72) Inventor: **KIMURA, Kazuya**
**Kyoto, 6008530 (JP)**

(74) Representative: **Bardehle Pagenberg**
**Partnerschaft mbB**
**Patentanwälte Rechtsanwälte**
**Prinzregentenplatz 7**
**81675 München (DE)**

(54) **OPTICAL INTERFERENCE RANGING SENSOR**

(57)     Provided is an optical interference ranging sensor equipped with a plurality of light receiving channels corresponding to one light projecting channel, the optical interference ranging sensor being capable of improving resistance to disturbances. An optical interference ranging sensor according to an aspect of the present invention includes: a light source that projects light while changing a wavelength; an interferometer that generates interference light based on measurement light and reference light; a light receiver that receives the interference light from the interferometer for conversion into an electric signal; and a processing unit that calculates a distance from the sensor head to the measurement target. The interferometer includes a light projecting channel configured to propagate light supplied from the light source toward the sensor head and irradiate the measurement target with the light from the sensor head, and a plurality of light receiving channels configured to receive the measurement light and propagate the measurement light toward the light receiver, and at least one of the light projecting channel and the plurality of light receiving channels further propagates the reference light.

*FIG. 1*

EP 4 534 950 A1

## Description

CROSS-REFERENCE TO RELATED APPLICATION

This application is based on Japanese Patent Application No. 2023-173505 filed with the Japan Patent Office on October 5, 2023, the entire contents of which are incorporated herein by reference.

FIELD

The present invention relates to an optical interference ranging sensor.

BACKGROUND

In recent years, an optical ranging sensor that measures the distance to a measurement target in a non-contact manner has become widespread. For example, as an optical ranging sensor, an optical interference ranging sensor is known to generate interference light based on reference light and measurement light from light projected from a wavelength-swept light source, and to measure the distance to a measurement target on the basis of the interference light.

For example, "Joint aperture detection for speckle reduction and increased collection efficiency in ophthalmic MHz OCT", written by Thomas Klein et al., discloses a technique in which measurement light projected by one light projecting channel is received by a plurality of light receiving channels in a Mach-Zehnder type optical interference ranging sensor to take measures against speckles and other issues.

However, as described in "Joint aperture detection for speckle reduction and increased collection efficiency in ophthalmic MHz OCT" by Thomas Klein et al., in the Mach-Zehnder type optical interference ranging sensor, when disturbances such as vibration and temperature changes are applied, a measurement error may occur due to changes in the polarizations of the reference light and the measurement light.

SUMMARY

Therefore, an object of the present invention is to provide an optical interference ranging sensor equipped with a plurality of light receiving channels corresponding to one light projecting channel, the optical interference ranging sensor being capable of improving resistance to disturbances.

An optical interference ranging sensor according to an aspect of the present invention includes: a light source that projects light while changing a wavelength; an interferometer that is supplied with light projected from the light source, and generates interference light based on measurement light that is illuminated onto a measurement target by a sensor head and reflected, and reference light that follows an optical path at least partially different from an optical path of the measurement light; a light receiver that receives the interference light from the interferometer and converts the interference light into an electric signal; and a processing unit that calculates a distance from the sensor head to the measurement target on the basis of the electric signal. The interferometer includes a light projecting channel configured to propagate light supplied from the light source toward the sensor head and irradiate the measurement target with the light from the sensor head, and a plurality of light receiving channels configured to receive the measurement light reflected by the measurement target and propagate the measurement light toward the light receiver, and at least one of the light projecting channel and the plurality of light receiving channels further propagates the reference light. According to this aspect, since a plurality of light receiving channels are provided for one light projecting channel, it is possible to take measures against speckles. Furthermore, since the reference light propagates in at least one of the light projecting channel and the plurality of light receiving channels, the effect of disturbances such as vibration and temperature changes on each of the measurement light and the reference light becomes comparable, enabling a reduction in the effect of disturbances.

In the above aspect, the optical interference ranging sensor may further include a reference light generator that generates the reference light by reflecting a part of the light propagating in the light projecting channel. According to this aspect, since the reference light propagates in the light projecting channel, the effect of disturbances such as vibration and temperature changes on each of the measurement light and the reference light becomes comparable, enabling a reduction in the effect of disturbances.

In the above aspect, the reference light generator may be configured to propagate the reference light in the light projecting channel toward the light receiver. According to this aspect, since the reference light propagates in the light projecting channel toward the light receiver, the effect of disturbances such as vibration and temperature changes on each of the measurement light and the reference light becomes comparable, enabling a reduction in the effect of disturbances.

In the above aspect, the reference light generator may be a partial reflector provided in an optical path of light in the light projecting channel. According to this aspect, the partial reflector can transmit a part of the light propagating in the light projecting channel as the measurement light and reflect the other part of the light propagating in the light projecting channel as the reference light, thus generating the reference light with a simple configuration.

In the above aspect, the reference light generator may be configured to propagate the reference light toward the light receiver in at least one of the plurality of light receiving channels. According to this aspect, since the reference light propagates in the light receiving channel, the effect of disturbances such as vibration and temperature changes on each of the measurement light and the reference light becomes comparable, enabling a reduction in the effect of disturbances.

In the above aspect, the reference light generator may be a reflective surface that is provided in an optical path of light in the light projecting channel and reflects light propagating in the light projecting channel toward one of the light receiving channels. According to this aspect, the reflective surface can reflect a part of the light propagating in the light projecting channel toward one of the light receiving channels as the reference light, thus generating the reference light with a simple configuration.

In the above aspect, at least one of the plurality of light receiving channels may be further configured to propagate the light supplied from the light source toward the sensor head, and the optical interference ranging sensor may further include a reference light generator that generates the reference light by reflecting a part of the light propagating through at least one of the light receiving channels. According to this aspect, since the reference light propagates toward the light receiver by a part of the light being reflected in at least one of the light receiving channels, the effect of disturbances such as vibration and temperature changes on each of the measurement light and the reference light becomes comparable, enabling a reduction in the effect of disturbances.

In the above aspect, the reference light generator may be a partial reflector provided in an optical path of light in at least one of the light receiving channels. According to this aspect, the partial reflector can reflect a part of the light propagating in at least one of the light receiving channels as the reference light, thus generating the reference light with a simple configuration.

In the above aspect, at least one of the light receiving channels may include a light shield that shields at least a part of the light supplied from the light source and propagating toward the sensor head. According to this aspect, the light shield can shield the light that has propagated in at least one of the light receiving channels and has been transmitted through the partial reflector, thereby improving the accuracy of the optical interference ranging sensor.

In the above aspect, at least one of the light projecting channel and the plurality of light receiving channels may include an optical fiber for propagating the measurement light and the reference light. According to this aspect, it is possible to configure an optical interference ranging sensor with a simple configuration, equipped with a plurality of light receiving channels corresponding to one light projecting channel, the optical interference ranging sensor being capable of improving resistance to disturbances.

In the above aspect, at least one of the light projecting channel and the plurality of light receiving channels may include a first optical fiber for propagating the measurement light and a second optical fiber for propagating the reference light. According to this aspect, it is possible to configure an optical interference ranging sensor with a simple configuration, equipped with a plurality of light receiving channels corresponding to one light projecting channel, the optical interference ranging sensor being capable of improving resistance to disturbances.

According to the present invention, it is possible to provide an optical interference ranging sensor equipped with a plurality of light receiving channels corresponding to one light projecting channel, the optical interference ranging sensor being capable of improving resistance to disturbances.

BRIEF DESCRIPTION OF THE DRAWINGS

Fig. 1 is a schematic external view illustrating an outline of a displacement sensor 10 according to the present disclosure;
Fig. 2 is a flowchart illustrating a procedure for measuring a measurement target T with the displacement sensor 10 according to the present disclosure;
Fig. 3 is a functional block diagram illustrating an outline of a sensor system 1 in which the displacement sensor 10 according to the present disclosure is used;
Fig. 4 is a flowchart illustrating a procedure for measuring the measurement target T with the sensor system 1 using the displacement sensor 10 according to the present disclosure;
Fig. 5A is a diagram for describing a principle of measuring the measurement target T with the displacement sensor 10 according to the present disclosure;
Fig. 5B is a diagram for describing another principle of measuring the measurement target T with the displacement sensor 10 according to the present disclosure;
Fig. 5C is a diagram for describing another principle of measuring the measurement target T with the displacement sensor 10 according to the present disclosure;
Fig. 5D is a diagram for describing another principle of measuring the measurement target T with the displacement sensor 10 according to the present disclosure;
Fig. 6A is a perspective view illustrating a schematic configuration of a sensor head 20;
Fig. 6B is a schematic view illustrating an internal structure of the sensor head 20;
Fig. 7 is a block diagram for describing signal processing in the controller 30;
Fig. 8 is a flowchart illustrating a method for calculating the distance to a measurement target T, executed by a processing unit 59 in a controller 30;
Fig. 9A is a diagram illustrating a state in which a waveform signal (voltage vs time) is frequency-converted into a spectrum (voltage vs frequency);

Fig. 9B is a diagram illustrating a state in which a spectrum (voltage vs frequency) is distance-converted into a spectrum (voltage vs distance);

Fig. 9C is a diagram illustrating a state in which a peak is detected on the basis of a spectrum (voltage vs distance) and a distance value corresponding thereto is calculated;

Fig. 10A is a diagram illustrating a specific example of a configuration of a fiber optic cable according to the present disclosure;

Fig. 10B is a view illustrating an example of a schematic view of an end of a fiber optic cable 44 as viewed from an arrow 44D illustrated in Fig. 10A;

Fig. 11A is a diagram illustrating another specific example of the configuration of the fiber optic cable according to the present disclosure; and

Fig. 11B is a view illustrating an example of a schematic view of an end of a fiber optic cable 45 as viewed from an arrow 45D illustrated in Fig. 11A.

DETAILED DESCRIPTION

Hereinafter, a preferred embodiment of the present invention will be specifically described with reference to the accompanying drawings. Note that the embodiment described below is merely a specific example for carrying out the present invention, and does not limit the interpretation of the present invention. To facilitate understanding of the description, the same components in the drawings are denoted by the same reference numerals as much as possible, and a redundant description may be omitted.

[Outline of displacement sensor]

First, an outline of a displacement sensor according to the present disclosure will be described.

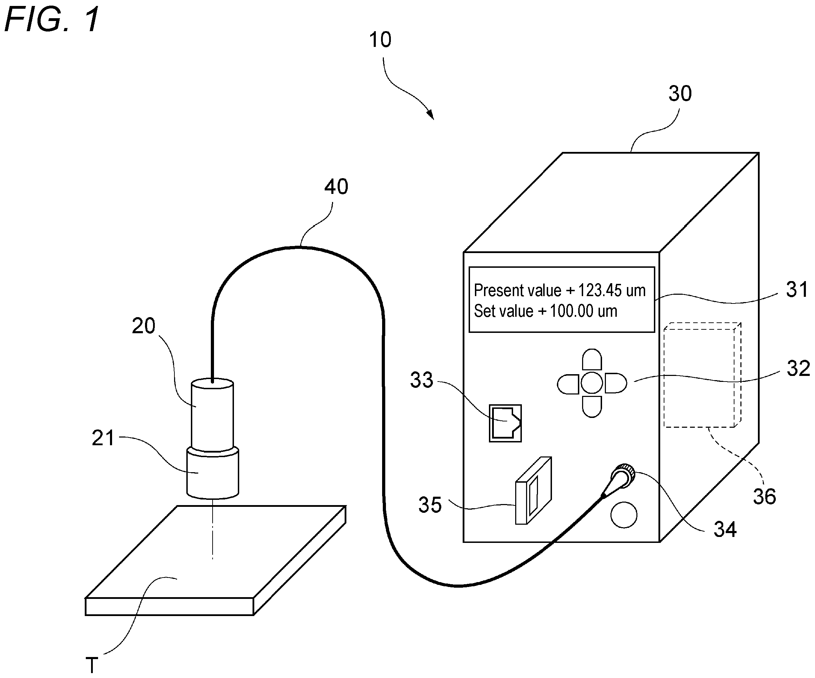

Fig. 1 is a schematic external view illustrating an outline of a displacement sensor 10 according to the present disclosure. As illustrated in Fig. 1, the displacement sensor 10 includes a sensor head 20 and a controller 30, and measures the displacement of a measurement target T (the distance to the measurement target T).

The sensor head 20 and the controller 30 are connected by a fiber optic cable 40, and an objective lens 21 is attached to the sensor head 20. The controller 30 includes a display 31, a setting unit 32, an external interface (I/F) 33, a fiber optic cable junction 34, and an external storage 35, and further includes a measurement processing unit 36 on the inside.

The sensor head 20 irradiates the measurement target T with light output from the controller 30 and receives reflected light from the measurement target T. The sensor head 20 includes a reference surface on the inside for reflecting the light, output from the controller 30 and received via the fiber optic cable 40, to interfere with the reflected light from the measurement target T described above.

Although the objective lens 21 is attached to the sensor head 20, the objective lens 21 is configured to be detachable. The objective lens 21 may be interchangeable with an objective lens having an appropriate focal length according to the distance between the sensor head 20 and the measurement target T, or a variable-focus objective lens may be applied.

Furthermore, when the sensor head 20 is installed, the measurement target T may be irradiated with guide light (visible light), and the sensor head 20 and/or the measurement target T may be installed so that the measurement target T is appropriately located within the measurement region of the displacement sensor 10.

The fiber optic cable 40 is connected to and extends from the fiber optic cable junction 34 disposed in the controller 30, and connects the controller 30 and the sensor head 20. The fiber optic cable 40 may include at least one optical fiber 41P that guides reference light and at least one optical fiber 42P that guides measurement light. Thus, the fiber optic cable 40 is configured to guide the light projected from the controller 30 to the sensor head 20 via the optical fiber 42P, and further guide the returned light from the sensor head 20 to the controller 30 via the optical fiber 42P. Note that the fiber optic cable 40 is detachable from the sensor head 20 and the controller 30, and various fiber optic cables can be applied in terms of length, thickness, characteristics, and the like. The fiber optic cable 40 may be configured as a single core cable in which one core is formed in one clad, or may be configured as a multi-core cable in which a plurality of cores is formed in one clad. In the case of the multi-core cable, the distance between the plurality of optical paths is smaller, making it possible to reduce fluctuations in the measurement optical path and reference optical path due to bending or temperature fluctuations applied to the fiber optic cable 40.

The display 31 includes, for example, a liquid crystal display, an organic EL display, or the like. The display 31 displays the setting value of the displacement sensor 10, the amount of returned light received from the sensor head 20, and measurement results such as the displacement of the measurement target T (the distance to the measurement target T) measured by the displacement sensor 10.

For example, in the setting unit 32, a user operates mechanical buttons, a touch panel, or the like to make the settings necessary for measuring the measurement target T. All or some of these necessary settings may be made in advance or from an external connection device (not illustrated) connected to the external I/F 33. Furthermore, the external connection device may be connected in a wired or wireless manner via a network.

Here, the external I/F 33 includes, for example, Ethernet (registered trademark), an RS232C, an analog output, and the like. Another connection device may be connected to the external I/F 33 to make necessary settings from the external connection device, or to output measurement results measured by the displacement sensor 10, and the like, to the external connection device.

The controller 30 may also import data stored in the external storage 35 to make the settings necessary for measuring the measurement target T. The external storage 35 is, for example, an auxiliary storage device such as a universal serial bus (USB) memory, and stores in advance the settings necessary for measuring the measurement target T, and the like.

The measurement processing unit 36 in the controller 30 includes, for example, a wavelength-swept light source that projects light while continuously changing the wavelength, a light receiving element that receives returned light from the sensor head 20 and converts the returned light into an electric signal, a signal processing circuit that processes the electric signal, and the like. In the measurement processing unit 36, various processes are performed using the control unit, the storage, and the like so that the displacement of the measurement target T (the distance to the measurement target T) is finally calculated on the basis of the returned light from the sensor head 20. Details of these processes will be described later.

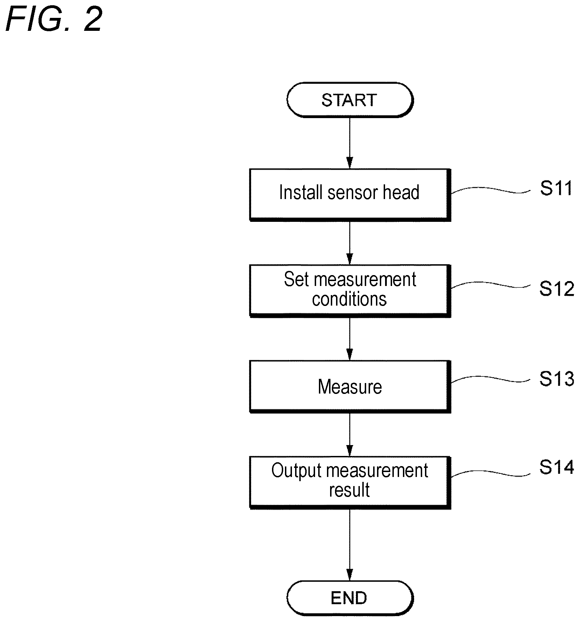

Fig. 2 is a flowchart illustrating a procedure for measuring the measurement target T with the displacement sensor 10 according to the present disclosure. As illustrated in Fig. 2, the procedure includes steps S11 to S14.

In step S11, the sensor head 20 is installed. For example, the sensor head 20 irradiates the measurement target T with guide light, and with reference to the irradiation, the sensor head 20 is installed at an appropriate position.

Specifically, the amount of returned light received from the sensor head 20 may be displayed on the display 31 of the controller 30, and the user may adjust the direction of the sensor head 20, the distance (height position) to the measurement target T, and the like while checking the amount of received light. Basically, if the sensor head 20 can irradiate the measurement target T perpendicularly (t an angle closer to perpendicular) with light, the amount of reflected light from the measurement target T will be larger, and the amount of returned light received from the sensor head 20 will also be larger.

In addition, the objective lens 21 may be replaced with an objective lens 21 having an appropriate focal length according to the distance between the sensor head 20 and the measurement target T.

Furthermore, in a case where appropriate setting cannot be made at the time of measuring the measurement target T (e.g., the amount of received light necessary for measurement cannot be obtained, or the focal length of the objective lens 21 is inappropriate), an error, incomplete setting, or the like may be displayed on the display 31 or output to the external connection device to notify the user.

In step S12, various measurement conditions are set at the time of measuring the measurement target T. For example, the user operates the setting unit 32 in the controller 30 to set unique calibration data (such as a function for correcting linearity) of the sensor head 20.

In addition, various parameters may be set. For example, a sampling time, a measurement range, a threshold for determining whether a measurement result is normal or abnormal, and the like are set. Furthermore, a measurement cycle may be set according to the characteristics of the measurement target T, such as the reflectance and the material of the measurement target T, and a measurement mode or the like corresponding to the material of the measurement target T may be set.

Note that these measurement conditions and various parameters are set by operating the setting unit 32 in the controller 30, but may be set from the external connection device or by importing data from the external storage 35.

In step S13, the sensor head 20 installed in step S11 measures the measurement target T according to the measurement conditions and various parameters set in step S12.

Specifically, in the measurement processing unit 36 of the controller 30, the wavelength-swept light source projects light, the light receiving element receives returned light from the sensor head 20, and the signal processing circuit performs frequency analysis, distance conversion, peak detection, and the like, thereby calculating the displacement of the measurement target T (the distance to the measurement target T). The specific measurement process will be described later in detail.

In step S14, the measurement result measured in step S13 is output. For example, the displacement of the measurement target T (the distance to the measurement target T) measured in step S13 is displayed on the display 31 of the controller 30 or output to the external connection device.

Whether the displacement of the measurement target T measured in step S13 (the distance to the measurement target T) is within the normal range or abnormal, on the basis of the threshold set in step S12, may also be displayed or output as the measurement result. Furthermore, the measurement conditions, various parameters, measurement mode, and the like set in step S12 may also be displayed or output together.

[Outline of system including displacement sensor]

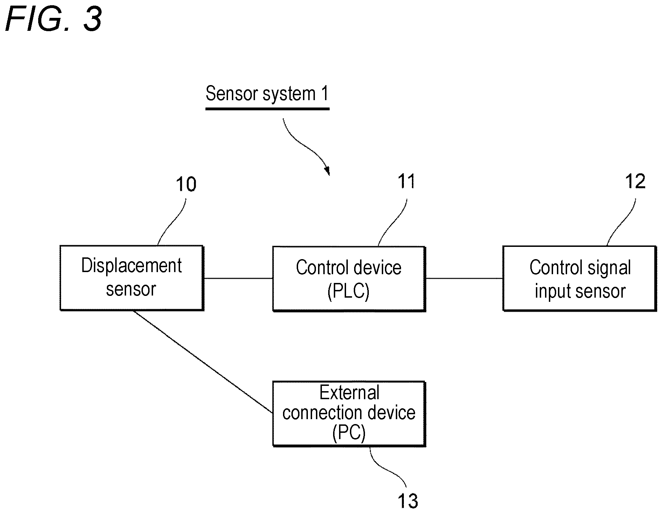

Fig. 3 is a functional block diagram illustrating an outline of a sensor system 1 in which the displacement sensor 10 according to the present disclosure is used. As illustrated in Fig. 3, the sensor system 1 includes a displacement sensor 10, a control device 11, a control signal input sensor 12, and an external connection device 13. Note that the displacement sensor 10 is connected to the control device 11 and the external connection device 13 by, for example, a communication cable or external connection cord (including, for example, an external input line, an external output line, a power supply line, and the like), and the control device 11 and the control signal input sensor 12 are connected by a signal line.

As described with reference to Figs. 1 and 2, the displacement sensor 10 measures the displacement of the measurement target T (the distance to the measurement target T). Then, the displacement sensor 10 may output the measurement result and the like to the control device 11 and the external connection device 13.

The control device 11 is, for example, a programmable logic controller (PLC), and gives various instructions to the displacement sensor 10 when the displacement sensor 10 measures the measurement target T.

For example, the control device 11 may output a measurement timing signal to the displacement sensor 10 on the basis of an input signal from the control signal input sensor 12 connected to the control device 11, or may output a zero reset command signal (a signal for setting the present measurement value to 0) or the like to the displacement sensor 10.

The control signal input sensor 12 outputs an on/off signal indicating a timing at which the displacement sensor 10 measures the measurement target T to the control device 11. For example, the control signal input sensor 12 may be installed near a production line where the measurement target T moves, detect that the measurement target T has moved to a predetermined position, and output an on/off signal to the control device 11.

The external connection device 13 is, for example, a personal computer (PC), which can be operated by the user to make various settings for the displacement sensor 10.

As a specific example, a measurement mode, an operation mode, a measurement cycle, the material of the measurement target T, and the like are set.

As the setting of the measurement mode, an "internal synchronous measurement mode", in which measurement is started periodically inside the control device 11, an "external synchronous measurement mode", in which measurement is started according to an input signal from the outside of the control device 11, or another mode is selected.

As the setting of the operation mode, an "operation mode" for actually measuring the measurement target T, an "adjustment mode" for setting a measurement condition for measuring the measurement target T, or another mode is selected.

The measurement cycle is a cycle for measuring the measurement target T, and may be set according to the reflectance of the measurement target T. However, even if the reflectance of the measurement target T is low, the measurement target T can be appropriately measured by lengthening and appropriately setting the measurement cycle.

For the measurement target T, a "rough surface mode" suitable for a case where diffuse reflection is relatively large as a component of reflected light, a "mirror surface mode" suitable for a case where specular reflection is relatively large as a component of reflected light, a "standard mode" intermediate between these modes, or another mode selected.

In this manner, the measurement target T can be measured with higher accuracy by making appropriate settings according to the reflectance and the material of the measurement target T.

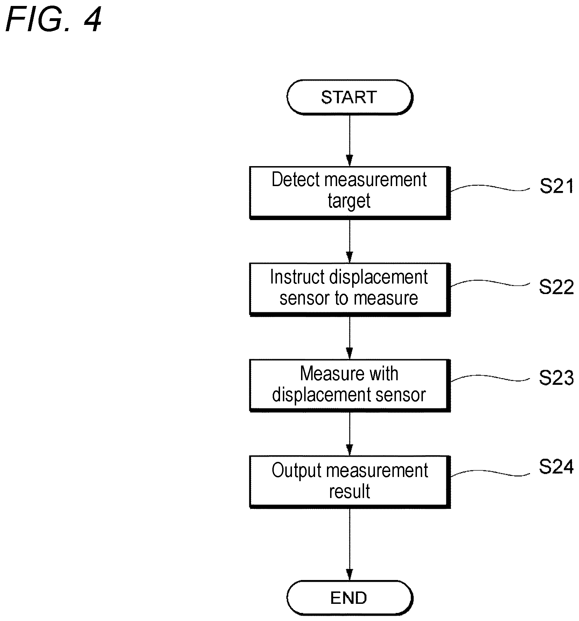

Fig. 4 is a flowchart illustrating a procedure for measuring the measurement target T with the sensor system 1 using the displacement sensor 10 according to the present disclosure. As illustrated in Fig. 4, the procedure is a procedure in the case of the external synchronous measurement mode described above, and includes steps S21 to S24.

In step S21, the sensor system 1 detects the measurement target T that is a target to be measured. Specifically, the control signal input sensor 12 detects that the measurement target T has moved to a predetermined position on the production line.

In step S22, the sensor system 1 instructs the displacement sensor 10 to measure the measurement target T detected in step S21. Specifically, the control signal input sensor 12 outputs an on/off signal to the control device 11, thereby instructing the timing to measure the measurement target T detected in step S21. The control device 11 outputs a measurement timing signal to the displacement sensor 10 on the basis of the on/off signal, instructing the measurement of the measurement target T.

In step S23, the displacement sensor 10 measures the measurement target T. Specifically, the displacement sensor 10 measures the measurement target T on the basis of the measurement instruction received in step S22.

In step S24, the sensor system 1 outputs the measurement result measured in step S23. Specifically, the displacement sensor 10 displays a result of the measurement process on the display 31 or outputs the result to the control device 11, the external connection device 13, or the like via the external I/F 33.

Although the procedure in the case of the external synchronous measurement mode in which the measurement target T is measured by the detection of the measurement target T by the control signal input sensor 12 has been described with reference to Fig. 4, the present invention is not limited thereto. For example, in the case of the internal synchronous measurement mode, instead of steps S21 and S22, a measurement timing signal is generated on the basis of a preset cycle, thereby instructing the displacement sensor 10 to measure the measurement target T.

Next, the configuration of the displacement sensor 10 according to the present disclosure will be described.

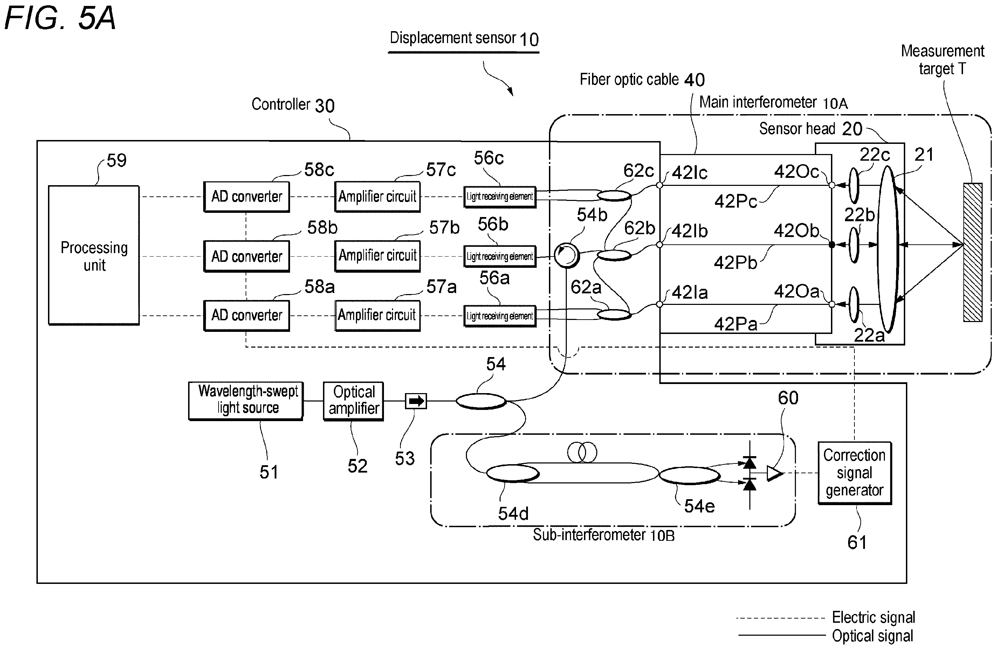

Fig. 5A is a diagram for describing an example of a configuration of the displacement sensor 10 according to the present disclosure. As illustrated in Fig. 5A, the displacement sensor 10 includes the sensor head 20, the fiber optic cable 40, and the controller 30. The sensor head 20 includes an objective lens 21 and a plurality of collimator lenses 22a to 22c. The controller 30 includes a wavelength-swept light source 51, an optical amplifier 52, an isolator 53, a plurality of optical couplers 54 and 54a to 54e, a plurality of light receiving elements (e.g., a photodetector (PD)) 56a to 56c, a plurality of amplifier circuits 57a to 57c, a plurality of analog-to-digital (AD) converters (e.g., an analog-to-digital converter) 58a to 58c, a processing unit (e.g., a processor) 59, a balance detector 60, and a correction signal generator 61. The fiber optic cable 40 includes optical fibers 41Pa to 41Pc and optical fibers 42Pa to 42Pc.

The sensor head 20, the fiber optic cable 40, and the plurality of optical couplers 62a, 62b, 62c constitute a main interferometer 10A. Here, the main interferometer 10A is supplied with light projected from the wavelength-swept light source 51, and generates interference light based on measurement light that is illuminated onto the measurement target T by the sensor head 20 and reflected, and reference light that follows an optical path at least partially different from an optical path of the measurement light. Each of the plurality of light receiving elements 56a to 56c is an example of a light receiver, and receives interference light from the main interferometer 10A and converts the interference light into an electric signal. The controller is an example of a processing unit, and calculates the distance from the sensor head 20 to the measurement target T on the basis of the electric signal generated by the light receiver.

The displacement sensor 10 includes a first channel, a second channel, and a third channel. That is, an optical path, including the optical fiber 42Pa within the fiber optic cable 40 and the sensor head 20, and the collimator lens 22a, constitute the first channel. An optical path, including the optical fiber 42Pb within the fiber optic cable 40 and the sensor head 20, and the collimator lens 22b, constitute the second channel. An optical path, including the optical fiber 42Pc within the fiber optic cable 40 and the sensor head 20, and the collimator lens 22c, constitute the third channel.

In an example of the configuration of the displacement sensor 10 illustrated in Fig. 5A, the first channel is configured as a light receiving channel, the second channel is configured as a light projecting channel and a light receiving channel, and the third channel is configured as a light receiving channel. Here, the light projecting channel may be a channel configured to propagate light supplied from the light source toward the sensor head and to cause the sensor head to irradiate the measurement target with the light. The light receiving channel may be a channel configured to receive measurement light reflected by the measurement target and propagate the measurement light toward the light receiver. In the displacement sensor 10 according to the embodiment, for example, at least one of the light projecting channel and the plurality of light receiving channels further propagates reference light.

The wavelength-swept light source 51 projects laser light with a swept wavelength. If a method of modulating a vertical cavity surface emitting laser (VCSEL) with a current, for example, is applied to the wavelength-swept light source 51, mode-hopping is less likely to occur due to the short resonator length, and the wavelength is easily changed, enabling the wavelength-swept light source 51 to be implemented at a low cost.

The optical amplifier 52 amplifies the light projected from the wavelength-swept light source 51. For example, by applying an erbium-doped fiber amplifier (EDFA), the optical amplifier 52 may be an optical amplifier dedicated to 1550 nm.

The isolator 53 is an optical element that transmits incident light in one direction and may be disposed immediately after the wavelength-swept light source 51 to prevent the effect of noise generated by the returned light.

In this manner, the light projected from the wavelength-swept light source 51 is amplified by the optical amplifier 52, passes through the isolator 53, and is split into the main interferometer 10A and the sub-interferometer 10B by the optical coupler 54. For example, in the optical coupler 54, the percentage of light that is split into the main interferometer 10A and the sub-interferometer 10B may be 90% or more into the main interferometer 10A side.

The light split into the main interferometer 10A propagates to the optical coupler 62b via the circulator 54b and further propagates from the optical coupler 62b to an end 421b of the second-channel optical fiber 42Pb in the fiber optic cable 40.

The light that has entered the optical fiber 42Pb from the end 421b is guided in the optical fiber 42Pb and propagates to an end 42Ob.

The end 42Ob is configured as a partial reflector (an example of a reference light generator) that transmits a part of the light that has propagated to the end 42Ob and reflects the other part. That is, the partial reflector is configured to propagate the reference light toward the light receiving element (an example of the light receiver) in the second channel that is the light projecting channel. Accordingly, the reference light common to the first channel to the third channel can be generated. In addition, since the reference light propagates in the light projecting channel, the effect of disturbances such as vibration and temperature changes are reduced. The partial reflector may be formed by coating the tip surface of the optical fiber with a partial reflective film having a reflectance of about 1%, or may be formed by physical contact (PC) polishing such that Fresnel reflection (reflectance of about 4%) between the optical fiber and air occurs.

A part of the light that has propagated to the end 42Ob is transmitted through the end 42Ob and enters the sensor head 20 as the measurement light, passes through the collimator lens 22b and the objective lens 21 in the sensor head 20, is illuminated onto the measurement target T, and is reflected by the measurement target T. Then, the measurement light reflected by the measurement target T is received by each of the first channel, the second channel, and the third channel in the displacement sensor 10. That is, a part of the measurement light reflected by the measurement target T is incident on an end 420a of the optical fiber 42Pa via the objective lens 21 and the collimator lens 22a, another part is incident on the end 42Ob of the optical fiber 42Pb via the objective lens 21 and the collimator lens 22b, and still another part is incident on an end 42Oc of the optical fiber 42Pc via the objective lens 21 and the collimator lens 22c.

The other part of the light that has propagated to the end 42Ob is reflected by the end 42Ob as the reference light. Then, the reference light, reflected by the end 42Ob, and the measurement light, reflected by the measurement target T and incident on the end 42Ob of the second channel, interfere with each other at the end 42Ob to generate the interference light of the second channel. The interference light is guided in the optical fiber 42Pb toward the end 421b and supplied from the end 421b to the optical coupler 62b. The interference light received by the light receiving element 56b is converted into an electric signal.

The measurement light, illuminated onto the measurement target T via the end 42Ob of the optical fiber 42Pb and then reflected by the measurement target T and incident on the end 420a of the first-channel optical fiber 42Pa, is guided in the optical fiber 42Pa and supplied from an end 421a to the optical coupler 62a. On the other hand, the reference light reflected by the end 42Ob of the optical fiber 42Pb propagates through the optical fiber 42Pb and is supplied to the optical coupler 62b. The optical coupler 62b supplies a part of the reference light to the optical coupler 62a and the optical coupler 62c. The reference light supplied from the optical coupler 62b and the measurement light supplied from the end 421a of the optical fiber 42Pa interfere with each other at the optical coupler 62a to generate the interference light of the first channel, and at least a part of the interference light is supplied to the light receiving element 56a. The interference light received by the light receiving element 56a is converted into an electric signal.

The measurement light, illuminated onto the measurement target T via the end 42Ob of the optical fiber 42Pb and then reflected by the measurement target T and incident on the end 42Oc of the third-channel optical fiber 42Pc, is guided in the optical fiber 42Pc and supplied from an end 421c to the optical coupler 62c. On the other hand, the reference light reflected by the end 42Oc of the optical fiber 42Pc propagates through the optical fiber 42Pc and is supplied to the optical coupler 62c. The optical coupler 62b supplies a part of the reference light to the optical coupler 62a and the optical coupler 62c. The reference light supplied from the optical coupler 62b and the measurement light supplied from the end 421c of the optical fiber 42Pc interfere with each other at the optical coupler 62c to generate the interference light of the third channel, and at least a part of the interference light is supplied to the light receiving element 56c. The interference light received by the light receiving element 56c is converted into an electric signal.

As described above, the light receiving elements 56a to 56c receive the interference light from the first channel, the second channel, and the third channel of the main interferometer 10A, respectively, and each generate an electric signal corresponding to the amount of the received light.

The amplifier circuits 57a to 57c amplify the electric signals output from the light receiving elements 56a to 56c, respectively.

The AD converters 58a to 58c receive the electric signals amplified by the amplifier circuits 57a to 57c, respectively, and convert the electric signals from analog signals to digital signals (AD conversion). Here, each of the AD converters 58a to 58c performs AD conversion on the basis of a correction signal from the correction signal generator 61 in the sub-interferometer 10B.

To correct the nonlinearity of the wavelength during the sweeping of the wavelength-swept light source 51, the sub-interferometer 10B acquires an interference signal and generates a correction signal called a K clock.

Specifically, the light split into the sub-interferometer 10B by the optical coupler 54 is further split by the optical coupler 54d. Here, the optical path of each split light is configured to have an optical path length difference using an optical fiber with a different length between the optical coupler 54d and the optical coupler 54e, for example, and interference light corresponding to the optical path length difference is output from the optical coupler 54e. The balance detector 60 then receives the interference light from the optical coupler 54e, removes noise by taking the balance with a signal in its opposite phase, and amplifies the optical signal for conversion into an electric signal.

Note that both the optical coupler 54d and the optical coupler 54e may split the light at a 50 : 50 ratio.

The correction signal generator 61 grasps the nonlinearity of the wavelength during the sweeping of the wavelength-swept light source 51 on the basis of the electric signal from the balance detector 60, generates a K clock corresponding to the nonlinearity, and outputs the K clock to each of the AD converters 58a to 58c.

Due to the nonlinearity of the wavelength during the sweeping of the wavelength-swept light source 51, the waves of the analog signals input to the AD converters 58a to 58c, respectively, in the main interferometer 10A are not equally spaced. In the AD converters 58a to 58c, AD conversion (sampling) is performed by correcting the sampling time on the basis of the K clock described above so that the waves are equal intervals.

As described above, since the K clock is a correction signal used to sample the analog signal of the main interferometer 10A, the K clock needs to be generated at a higher frequency than the analog signal of the main interferometer 10A. Specifically, the optical path length difference provided between the optical coupler 54d and the optical coupler 54e in the sub-interferometer 10B may be made longer than the optical path length difference provided between the tip (end surface) of the optical fiber in the main interferometer 10A and the measurement target T, or the correction signal generator 61 may increase the frequency by multiplication (e.g., by 8 times).

The processing unit 59 acquires the digital signals, which have been AD-converted and had the nonlinearity corrected by the AD converters 58a to 58c, and calculates the displacement of the measurement target T (the distance to the measurement target T) on the basis of the digital signals. Specifically, the processing unit 59 calculates the distance by performing frequency conversion on the digital signals using a fast Fourier transform (FFT) and analyzing the digital signals. Detailed processing in the processing unit 59 will be described later.

The processing unit 59 is required to perform high-speed processing, and is therefore often implemented by an integrated circuit, such as a field-programmable gate array (FPGA).

Furthermore, here, three-channel optical paths are provided in the main interferometer 10A. The sensor head 20 irradiates the measurement target T with measurement light from each optical path to measure the distance to the measurement target T and the like on the basis of interference light (returned light) obtained from each optical path (multi-channel). The number of channels in the main interferometer 10A is not limited to three, and may be two, four or more.

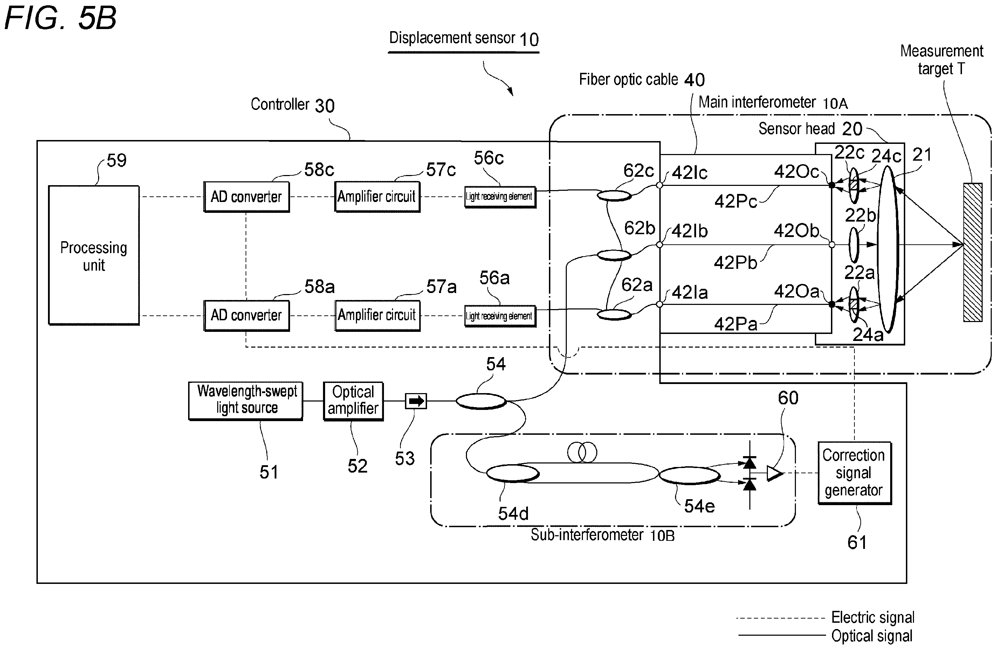

Fig. 5B is a view for describing another example of the configuration of the displacement sensor 10 according to the present disclosure.

Hereinafter, the differences between the configuration of the displacement sensor 10 illustrated in Fig. 5B and the configuration of the displacement sensor 10 illustrated in Fig. 5A will be described, and the description of portions that are the same as those in the configuration of the displacement sensor 10 illustrated in Figure 5A will be omitted as appropriate.

The displacement sensor 10 includes a first channel, a second channel, and a third channel. That is, an optical path, including the optical fiber 42Pa within the fiber optic cable 40 and the sensor head 20, and the collimator lens 22a, constitute the first channel. An optical path, including the optical fiber 42Pb within the fiber optic cable 40 and the sensor head 20, and the collimator lens 22b, constitute the second channel. An optical path, including the optical fiber 42Pc within the fiber optic cable 40 and the sensor head 20, and the collimator lens 22c, constitute the third channel.

In an example of the configuration of the displacement sensor 10 illustrated in Fig. 5B, the first channel is configured as a light receiving channel, the second channel is configured as a light projecting channel, and the third channel is configured as a light receiving channel. Note that the displacement sensor 10 illustrated in Fig. 5B does not include the circulator 54b, the light receiving element 56b, the amplifier circuit 57b, and the AD converter 58b. In the displacement sensor 10 illustrated in Fig. 5B, the optical couplers 62a, 62c may be configured as circulators.

The light split into the main interferometer 10A propagates to the optical coupler 62b and further propagates from the optical coupler 62b to the end 421b of the second-channel optical fiber 42Pb in the fiber optic cable 40, as well as to the optical couplers 62a, 62c. The light that has propagated to the optical coupler 62a propagates to the end 421a of the first-channel optical fiber 42Pa. The light that has propagated to the optical coupler 62c propagates to the end 421c of the third-channel optical fiber 42Pc.

The light that has entered the optical fiber 42Pb from the end 421b is guided in the optical fiber 42Pb and propagates to the end 42Ob.

The light that has propagated to the end 42Ob is transmitted through the end 42Ob and enters the sensor head 20 as measurement light, passes through the collimator lens 22b and the objective lens 21 in the sensor head 20, is applied to the measurement target T, and is reflected by the measurement target T. Then, the measurement light reflected by the measurement target T is received by each of the first channel and the third channel in the displacement sensor 10. That is, a part of the measurement light reflected by the measurement target T is incident on the end 420a of the optical fiber 42Pa via the objective lens 21 and the collimator lens 22a, and the other part is incident on the end 42Oc of the optical fiber 42Pc via the objective lens 21 and the collimator lens 22c. Note that a light shielding plate 24a provided on the collimator lens 22a is configured as a unidirectional passing element. The measurement light reflected by the measurement target T passes through the objective lens 21, and then bypasses the light shielding plate 24a and is received by the end 420a of the optical fiber 42Pa. Similarly, a light shielding plate 24c provided on the collimator lens 22c is configured as a unidirectional passing element. The measurement light reflected by the measurement target T passes through the objective lens 21, and then bypasses the light shielding plate 24c and is received by the end 42Oc of the optical fiber 42Pc.

The light that has propagated to the end 421a of the first-channel optical fiber 42Pa via the optical couplers 62b, 62a enters the optical fiber 42Pa from the end 421a, is guided in the optical fiber 42Pa, and propagates to the end 42Oa. The end 42Oa is configured as a partial reflector (an example of the reference light generator) that transmits a part of the light that has propagated to the end 420a and reflects the other part. That is, the partial reflector is configured to propagate the reference light toward the light receiving element (an example of the light receiver) in the first channel that is the light receiving channel. Hence, the reference light propagates in the light receiving channel, thus reducing the effect of disturbances such as vibration and temperature changes.

The collimator lens 22a is provided with a light shielding plate 24a configured as a unidirectional passing element, and light transmitted through the end 42Oa is shielded by the light shielding plate 24a. The light shielding plate 24a may be configured as, for example, an absorptive neutral density (ND) filter. This enables the first channel to be configured as a light receiving channel that does not output a measurement light beam, thus reducing the spot of the measurement light. Note that an isolator may be used instead of the light shielding plate 24a. The other part of the light that has propagated to the end 42Oa is reflected by the end 42Oa as the reference light.

The reference light, reflected by the end 42Oa, and the measurement light, reflected by the measurement target T and incident on the end 420a of the first channel, interfere with each other at the end 420a to generate the interference light of the first channel. The interference light is guided in the optical fiber 42Pa toward the end 421a and supplied from the end 421a to the optical coupler 62a. The interference light received by the light receiving element 56a is converted into an electric signal.

The light that has propagated through the optical couplers 62b, 62c to the end 421c of the third-channel optical fiber 42Pc enters the optical fiber 42Pc from the end 421c, is guided in the optical fiber 42Pc, and propagates to the end 42Oc. The end 42Oc is configured as a partial reflector (an example of the reference light generator) that transmits a part of the light that has propagated to the end 42Oc and reflects the other part. That is, the partial reflector is configured to propagate the reference light toward the light receiving element (an example of the light receiver) in the third channel that is the light receiving channel. Hence, the reference light propagates in the light receiving channel, thus reducing the effect of disturbances such as vibration and temperature changes.

The collimator lens 22c is provided with the light shielding plate 24c configured as a unidirectional passing element, and light transmitted through the end 42Oc is shielded by the light shielding plate 24c. The light shielding plate 24c may be configured as, for example, an absorptive neutral density (ND) filter. This enables the third channel to be configured as a light receiving channel that does not output a measurement light beam, thus reducing the spot of the measurement light. Note that an isolator may be used instead of the light shielding plate 24c. The other part of the light that has propagated to the end 42Oc is reflected by the end 42Oc as the reference light.

The reference light, reflected by the end 42Oc, and the measurement light, reflected by the measurement target T and incident on the end 42Oc of the third channel, interfere with each other at the end 42Oc to generate the interference light of the third channel. The interference light is guided in the optical fiber 42Pc toward the end 421c and supplied from the end 421c to the optical coupler 62c. The interference light received by the light receiving element 56c is converted into an electric signal.

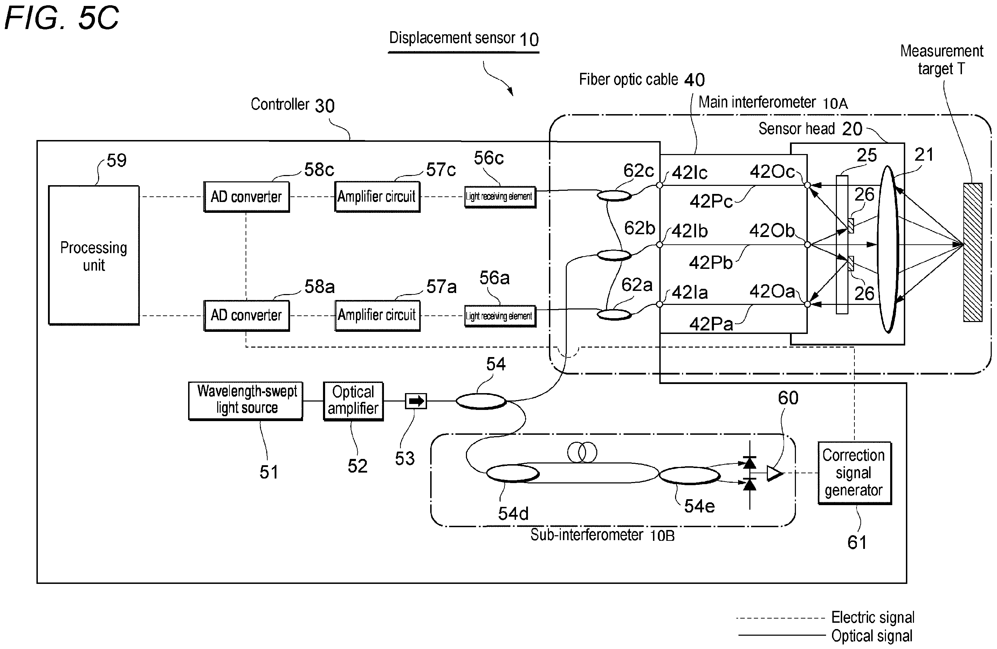

Fig. 5C is a view for describing another example of the configuration of the displacement sensor 10 according to the present disclosure. Hereinafter, the differences between the configuration of the displacement sensor 10 illustrated in Fig. 5C and that of the displacement sensor 10 illustrated in Fig. 5B will be described, and the description of the same portions as in the configuration of the displacement sensor 10 illustrated in Fig. 5B will be omitted as appropriate.

The displacement sensor 10 includes a first channel, a second channel, and a third channel. That is, an optical path, including the optical fiber 42Pa within the fiber optic cable 40 and the sensor head 20, and the like, constitute the first channel. An optical path, including the optical fiber 42Pb within the fiber optic cable 40 and the sensor head 20, and the like, constitute a second channel. An optical path, including the optical fiber 42Pc within the fiber optic cable 40 and the sensor head 20, and the like, constitute a third channel.

In an example of the configuration of the displacement sensor 10 illustrated in Fig. 5C, the first channel is configured as a light receiving channel, the second channel is configured as a light projecting channel, and the third channel is configured as a light receiving channel. Note that the displacement sensor 10 illustrated in Fig. 5C does not include the collimator lenses 22a, 22b, 22c, the light receiving element 56b, the amplifier circuit 57b, and the AD converter 58b. On the other hand, the displacement sensor 10 illustrated in Fig. 5C includes a reference light generation element 25. Here, the reference light generation element 25 is an example of the reference light generator configured to cause at least one of the plurality of light receiving channels to receive the reference light. The reference light generation element 25 may be formed of a transparent member. The material of the member is not particularly limited, but may be, for example, resin, glass, or the like. The reference light generation element 25 is provided with a reflective surface 26 that reflects a part of the light that has propagated from the end 42Ob of the second-channel optical fiber 42Pb. For example, the reflective surface 26 may be formed by depositing aluminum, or may be formed by applying coating to be a diffuser.

The light split into the main interferometer 10A propagates to the optical coupler 62b and further propagates from the optical coupler 62b to the end 421b of the second-channel optical fiber 42Pb in the fiber optic cable 40.

The light that has entered the optical fiber 42Pb from the end 421b is guided in the optical fiber 42Pb and propagates to the end 42Ob.

A part of the light that has propagated to the end 42Ob is transmitted through the end 42Ob and enters the sensor head 20 as measurement light, passes through the reference light generation element 25 and the objective lens 21 in the sensor head 20, is illuminated onto the measurement target T, and is reflected by the measurement target T. Then, the measurement light reflected by the measurement target T is received by each of the first channel, the second channel, and the third channel in the displacement sensor 10. That is, a part of the measurement light reflected by the measurement target T is incident on the end 420a of the optical fiber 42Pa via the objective lens 21 and the collimator lens 22a, and the other part is incident on the end 42Oc of the optical fiber 42Pc via the objective lens 21 and the collimator lens 22c.

The other part of the light that has propagated through the optical fiber 42Pb to the end 42Ob is reflected by the reflective surface 26 of the reference light generation element 25 as the reference light, which then enters the optical fiber 42Pa from the end 420a of the optical fiber 42Pa and also enters the optical fiber 42Pc from the end 42Oc of the optical fiber 42Pc.

The reference light, reflected by the reflective surface 26 of the reference light generation element 25 and incident from the end 42Oa of the optical fiber 42Pa, and the measurement light, reflected by the measurement target T and incident on the end 42Oa of the first channel, interfere with each other at the end 42Oa to generate the interference light of the first channel. The interference light is guided in the optical fiber 42Pa toward the end 421a and supplied from the end 421a to the optical coupler 62a. The interference light received by the light receiving element 56a is converted into an electric signal.

The reference light, reflected by the reflective surface 26 of the reference light generation element 25 and reflected by the end 42Oc incident from the end 42Oc of the optical fiber 42Pc, and the measurement light, reflected by the measurement target T and incident on the end 42Oc of the third channel, interfere with each other at the end 42Oc to generate the interference light of the third channel. The interference light is guided in the optical fiber 42Pc toward the end 421c and supplied from the end 421c to the optical coupler 62c. The interference light received by the light receiving element 56c is converted into an electric signal.

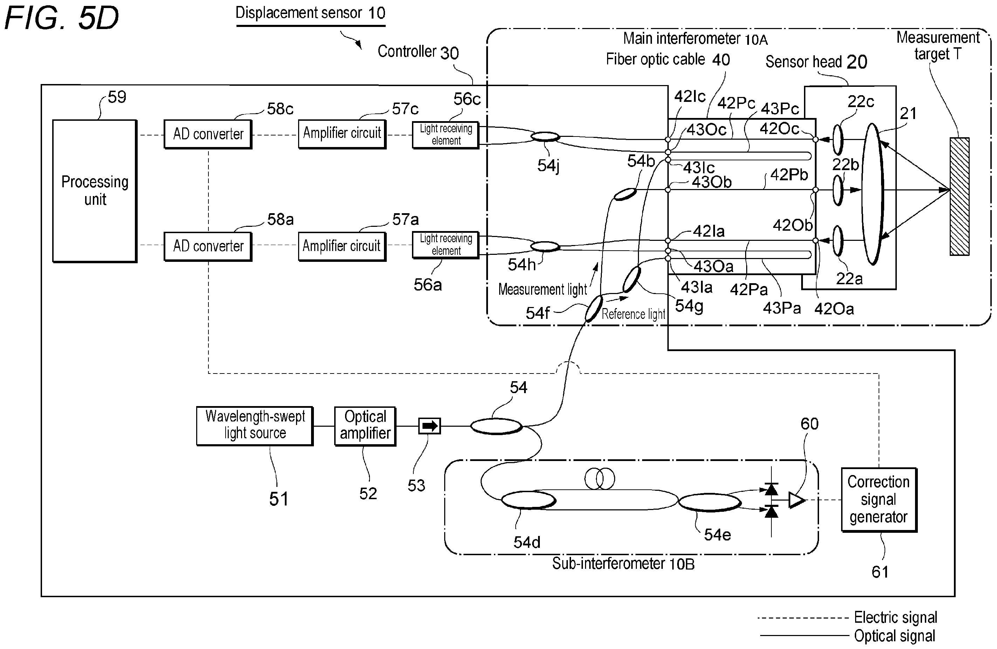

Fig. 5D is a view for describing another example of the configuration of the displacement sensor 10 according to the present disclosure. As illustrated in Fig. 5D, the displacement sensor 10 includes the sensor head 20, the fiber optic cable 40, and the controller 30. The sensor head 20 includes an objective lens 21 and a plurality of collimator lenses 22a to 22c. The controller 30 includes a wavelength-swept light source 51, an optical amplifier 52, an isolator 53, a plurality of optical couplers 54, 54b, 54h, 54i, 54j, a plurality of light receiving elements (e.g., a photodetector (PD)) 56a to 56c, a plurality of amplifier circuits 57a to 57c, a plurality of analog-to-digital (AD) converters (e.g., an analog-to-digital converter) 58a to 58c, a processing unit (e.g., a processor) 59, a balance detector 60, and a correction signal generator 61. The fiber optic cable 40 includes optical fibers 42Pa to 42Pc and optical fibers 43Pa to 43Pc.

For example, the displacement sensor 10 includes a first channel, a second channel, and a third channel. Here, some of these channels may include a plurality of adjacent optical paths (optical fibers). Fig. 5D illustrates an example in which the first channel and the third channel each include a plurality of adjacent optical paths (optical fibers). That is, optical paths, including the optical fiber 42Pa and the optical fiber 43Pa within the fiber optic cable 40 and the sensor head 20, and the collimator lens 22a, constitute the first channel. In addition, optical paths, including the optical fiber 42Pc and the optical fiber 43Pc within the fiber optic cable 40 and the sensor head 20, and the collimator lens 22c, constitute a third channel.

In other words, the first channel includes the optical fiber 42Pa (an example of a first optical fiber) for propagating the measurement light and the optical fiber 43Pa (an example of a second optical fiber) for propagating the reference light. The third channel includes the optical fiber 42Pc (an example of the first optical fiber) for propagating the measurement light and the optical fiber 43Pc (an example of the second optical fiber) for propagating the reference light.

In an example of the configuration of the displacement sensor 10 illustrated in Fig. 5D, the first channel is configured as a light receiving channel, the second channel is configured as a light projecting channel and a light receiving channel, and the third channel is configured as a light receiving channel.

The light projected from the wavelength-swept light source 51 is amplified by the optical amplifier 52 and is split by the optical coupler 54 to the main interferometer 10A side and the sub-interferometer 10B side via the isolator 53. The light split into the main interferometer 10A side is further split into measurement light and reference light by the optical coupler 54f.

The measurement light sequentially passes through the optical fiber 42Pb of the fiber optic cable 40, the collimator lens 22b of the sensor head 20, and the objective lens 21 via the optical coupler 54b in the second stage, is illuminated onto the measurement target T, and is reflected by the measurement target T. Then, the measurement light reflected by the measurement target T is received by each of the first channel and the third channel in the displacement sensor 10. That is, a part of the measurement light reflected by the measurement target T is incident on the end 420a of the optical fiber 42Pa via the objective lens 21 and the collimator lens 22a, and the other part is incident on the end 42Oc of the optical fiber 42Pc via the objective lens 21 and the collimator lens 22c.

The measurement light, illuminated onto the measurement target T via the end 42Ob of the optical fiber 42Pb and then reflected by the measurement target T and incident on the end 420a of the optical fiber 42Pa, is guided in the optical fiber 42Pa and supplied from the end 421a to the optical coupler 54h. The measurement light, illuminated onto the measurement target T via the end 42Ob of the optical fiber 42Pb and then reflected by the measurement target T and incident on the end 42Oc of the optical fiber 42Pc, is guided in the optical fiber 42Pc and supplied from the end 421c to the optical coupler 54j.

On the other hand, the reference light split by the optical coupler 54f is further split by the optical coupler 54g in the respective directions of the ends 431a, 431c of the fiber optic cable 40. The reference light beams incident on the respective ends 431a, 431c of the fiber optic cable 40 are guided in the optical fibers 43Pa, 43Pc in the fiber optic cable 40. Ends 43Oa, 43Oc are provided on the side opposite to the ends 431a, 431c of the optical fibers 43Pa, 43Pc. The reference light beams guided in the optical fibers 43Pa, 43Pc are supplied from the ends 43Oa, 43Oc to the optical couplers 54h, 54j.

In the optical coupler 54h, the measurement light, illuminated onto the measurement target T via the end 42Ob of the optical fiber 42Pb, reflected by the measurement target T, incident on the end 420a of the optical fiber 42Pa, and output from the end 421a, and the reference light, output from the optical coupler 54g and guided in the optical fiber 43Pa in the fiber optic cable 40, interfere with each other to generate interference light. Then, the interference light is received by the light receiving element 56a to be converted into an electric signal. In other words, the light is split into the measurement light and the reference light by the optical coupler 54f. Then, the interference light is generated corresponding to the optical path length difference between the optical path of the measurement light and the optical path of the reference light. The measurement light follows an optical path that passes from the optical coupler 54f through the optical coupler 54b, the optical fiber 42Pb, the collimator lens 22b, and the objective lens 21 to be reflected by the measurement target T, and passes through the objective lens 21, the collimator lens 22a, and the optical fiber 42Pa to reach the optical coupler 54h. The reference light follows an optical path that is guided in the optical fiber 43Pa from the optical coupler 54f via the optical coupler 54g to reach the optical coupler 54h. The interference light is received by the light receiving element 56a and converted into an electric signal.

In the optical coupler 54j, the measurement light, illuminated onto the measurement target T via the end 42Ob of the optical fiber 42Pb, reflected by the measurement target T, incident on the end 42Oc of the optical fiber 42Pc, and output from the end 421b, and the reference light output from the optical coupler 54g and guided in the optical fiber 43Pc in the fiber optic cable 40, interfere with each other. Then, the interference light is generated and received by the light receiving element 56c to be converted into an electric signal. In other words, the light is split into the measurement light and the reference light by the optical coupler 54f. Then, the interference light is generated corresponding to the optical path length difference between the optical path of the measurement light and the optical path of the reference light. The measurement light follows an optical path that passes from the optical coupler 54f through the optical coupler 54b, the optical fiber 42Pb, the collimator lens 22b, and the objective lens 21 to be reflected by the measurement target T, and passes through the objective lens 21, the collimator lens 22c, and the optical fiber 42Pc to reach the optical coupler 54j. The reference light follows an optical path that is guided in the optical fiber 43Pc from the optical coupler 54f via the optical coupler 54g to reach the optical coupler 54j. The interference light is received by the light receiving element 56c and converted into an electric signal.

Note that the light receiving elements 56a to 56c may be, for example, balance photo detectors.

As described above, the main interferometer 10A includes three optical paths (three channels), and generates two interference light beams corresponding to the optical path length differences between the measurement light beams reflected by the measurement target T and input to the optical couplers 54h, 54j after being illuminated onto the measurement target T via the end 42Ob of the optical fiber 42Pb and the reference light beams input to the optical couplers 54h, 54j after passing through the fiber optic cable 40 via the optical couplers 54f, 54g.

Note that the optical path length difference between the measurement light and the reference light may be set to be different in each of the two channels, for example, the optical path length between the optical coupler 54g and each of the optical couplers 54h, 54j.

Then, on the basis of the interference light obtained from each optical path length difference, the distance to the measurement target T and the like are measured (multi-channel).

[Structure of sensor head]

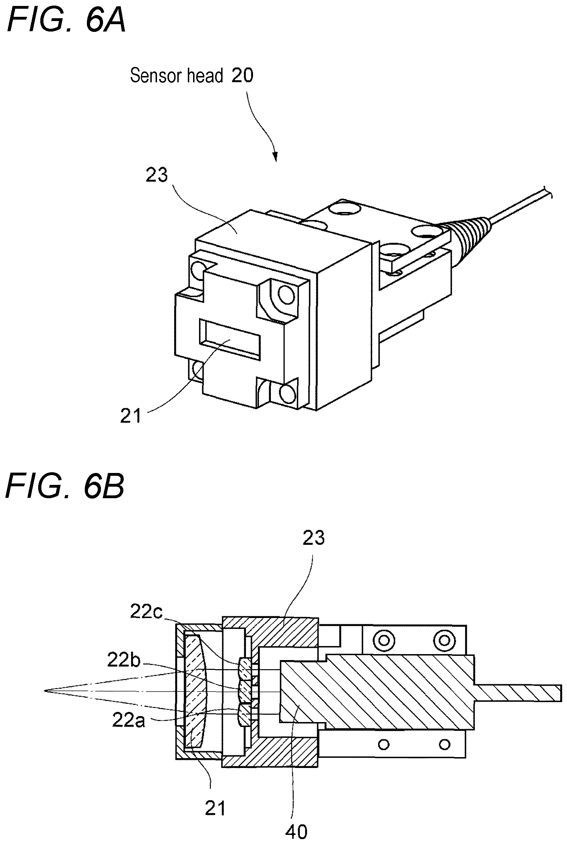

Here, the structure of the sensor head used for the displacement sensor 10 will be described. Fig. 6A is a perspective view illustrating a schematic configuration of the sensor head 20, and Fig. 6B is a schematic view illustrating an internal structure of the sensor head.

As illustrated in Fig. 6A, in the sensor head 20, a lens holder 23 houses an objective lens 21 and a collimator lens. For example, the size of the lens holder 23 is about 20 mm on one side surrounding the objective lens 21 and about 40 mm in length in the optical axis direction. The fiber optic cable 40 is connected to the sensor head 20.

As illustrated in Fig. 6B, the lens holder 23 houses one objective lens 21 and three collimator lenses 22a to 22c. The light from the optical fiber that guides the measurement light included in the fiber optic cable 40 is configured to be guided to each of the collimator lenses 22a to 22c. Furthermore, the measurement target T is irradiated with the light passed through each of the three collimator lenses 22a to 22c via the objective lens 21. In the example illustrated in Fig. 6B, the number of collimator lenses is three, but the number of collimator lenses may be a number corresponding to the number of optical fibers that guide the measurement light included in the fiber optic cable 40.

As described above, the fiber optic cable 40 and the collimator lenses 22a to 22c are held by the lens holder 23, together with the objective lens 21. to constitute the sensor head 20.

The lens holder 23 constituting the sensor head 20 may be made of metal (e.g., A2017) that can be processed with high strength and high accuracy.

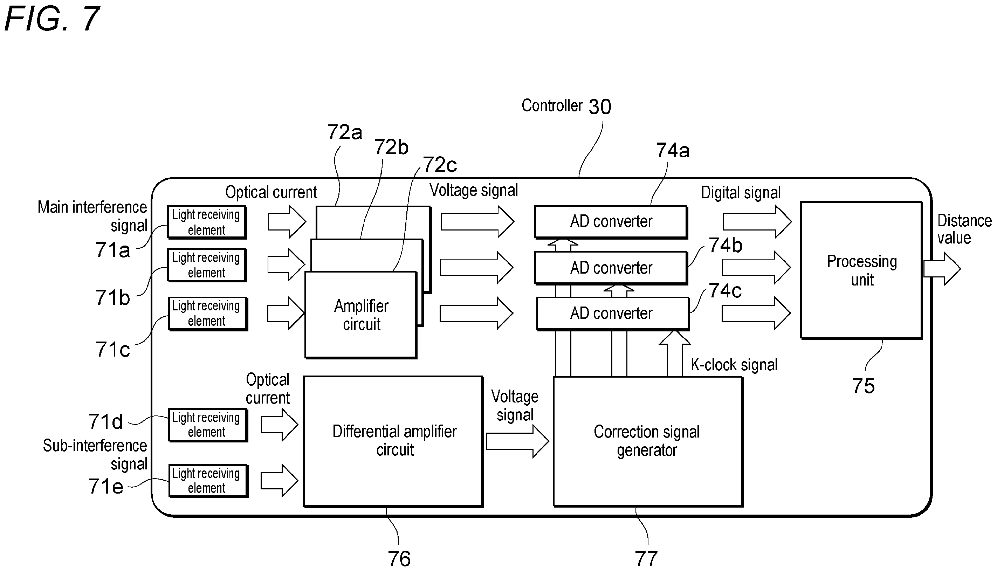

Fig. 7 is a block diagram for describing signal processing in the controller 30. As illustrated in Fig. 7, the controller 30 includes a plurality of light receiving elements 71a to 71e, a plurality of amplifier circuits 72a to 72c, a plurality of AD converters 74a to 74c, a processing unit 75, a differential amplifier circuit 76, and a correction signal generator 77.

In the controller 30, as illustrated in Fig. 5A, the light projected from the wavelength-swept light source 51 is split into the main interferometer 10A and the sub-interferometer 10B by the optical coupler 54. The main interference signal and the sub-interference signal obtained respectively are then processed to calculate a distance value to the measurement target T.

The plurality of light receiving elements 71a to 71c correspond to the light receiving elements 56a to 56c illustrated in Fig. 5A, respectively, receive main interference signals from the main interferometer 10A, and output the main interference signals as current signals to the amplifier circuits 72a to 72c, respectively.

The plurality of amplifier circuits 72a to 72c convert the current signals into voltage signals (I-V conversion) and amplify the voltage signals.

The plurality of AD converters 74a to 74c correspond to the AD converters 58a to 58c illustrated in Fig. 5A, and convert the voltage signals into digital signals on the basis of a K clock from the correction signal generator 77 to be described later (AD conversion).

The processing unit 75 corresponds to the processing unit 59 illustrated in Fig. 5A, converts the digital signals from the AD converters 74a to 74c into frequencies using FFT, analyzes the frequencies, and calculates a distance value to the measurement target T.

The plurality of light receiving elements 71d, 71e and the differential amplifier circuit 76 correspond to the balance detector 60 illustrated in Fig. 5A. The plurality of light receiving elements 71d, 71e each receive interference light in the sub-interferometer 10B, and one of them outputs a phase-inverted interference signal. The differential amplifier circuit 76 removes noise by taking the balance between the two signals and amplifies the interference signal for conversion into a voltage signal.

The correction signal generator 77 corresponds to the correction signal generator 61 illustrated in Fig. 5A, binarizes the voltage signal using a comparator, generates a K clock, and outputs the K clock to each of the AD converters 74a to 74c. The K clock needs to be generated at a higher frequency than the analog signal of the main interferometer 10A, so that the correction signal generator 77 may increase the frequency by multiplication (e.g., by 8 times).

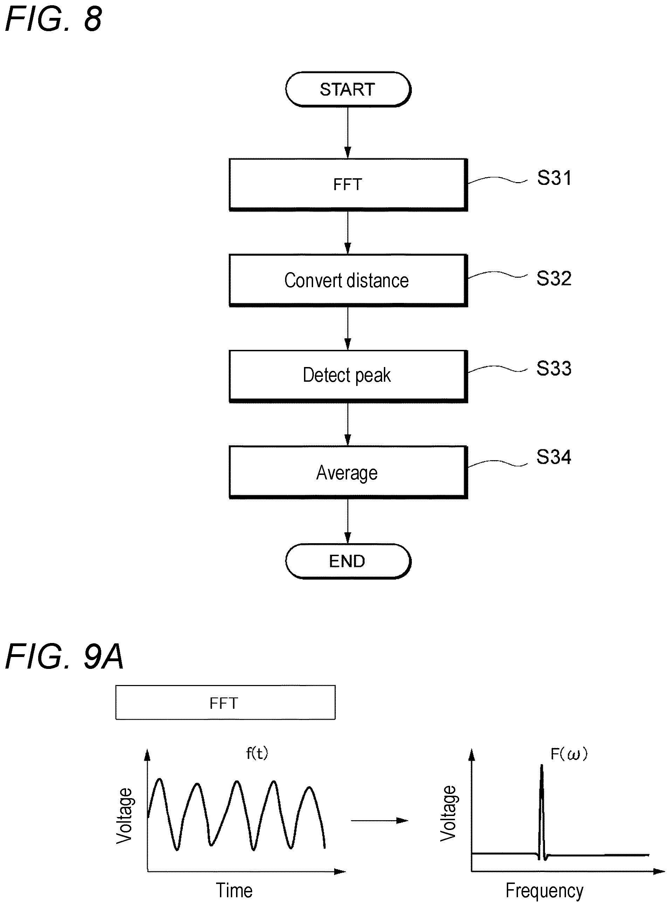

Fig. 8 is a flowchart illustrating a method for calculating the distance to the measurement target T, executed by the processing unit 59 in the controller 30. As illustrated in Fig. 8, the method includes steps S31 to S34.

In step S31, the processing unit 59 frequency-converts a waveform signal (voltage vs time) into a spectrum (voltage vs frequency) using the following FFT. Fig. 9A is a diagram illustrating a state in which a waveform signal (voltage vs time) is frequency-converted into a spectrum (voltage vs frequency).

[Math. 1]

$$\sum_{t=0}^{N-1} f(t)exp\left(-\,\mathrm{i}\frac{2\pi\omega t}{N}\right) = F(\omega)$$

N: Number of data points

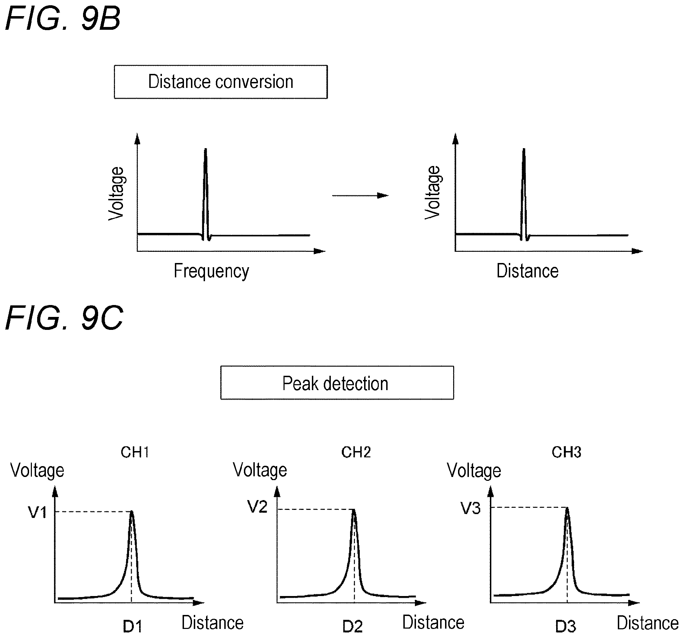

In step S32, the processing unit 59 distance-converts the spectrum (voltage vs frequency) into a spectrum (voltage vs distance). Fig. 9B is a diagram illustrating a state in which the spectrum (voltage vs frequency) is distance-converted into a spectrum (voltage vs distance).

In step S33, the processing unit 59 calculates a distance value corresponding to a peak on the basis of the spectrum (voltage vs distance). Fig. 9C is a diagram illustrating a state in which a peak is detected on the basis of the spectrum (voltage vs distance) and a distance value corresponding to the peak is calculated. As illustrated in Fig. 9C, here, the peak is detected in each of the three channels on the basis of the spectrum (voltage vs distance), and a distance value corresponding to each peak is calculated.

In step S34, the processing unit 59 averages the distance values calculated in step S33. Specifically, since the peak has been detected on the basis of the spectrum (voltage vs distance) in each of the three channels in step S33 and the corresponding distance value has been calculated, the processing unit 59 averages the distance values and outputs the averaged calculation result as the distance to the measurement target T.

In step S34, when averaging the distance values calculated in step S33, the processing unit 59 preferably averages the distance values where the signal-to-noise ratio (SNR) is equal to or greater than a threshold. For example, if the peak is detected on the basis of the spectrum (voltage vs distance) but the SNR is below the threshold in any of the three channels, the distance value calculated on the basis of the spectrum is determined to have low reliability and will thus not be adopted.

Next, the present disclosure will be described in detail as a specific embodiment, focusing on more characteristic configurations, functions, and properties. Note that the optical interference ranging sensor described below corresponds to the displacement sensor 10 described with reference to Figs. 1 to 9, and all or some of the basic configurations, functions, and properties included in the optical interference ranging sensor are common to the configurations, functions, and properties included in the displacement sensor 10 described with reference to Figs. 1 to 9.

<Embodiment>

[Configuration of fiber optic cable]

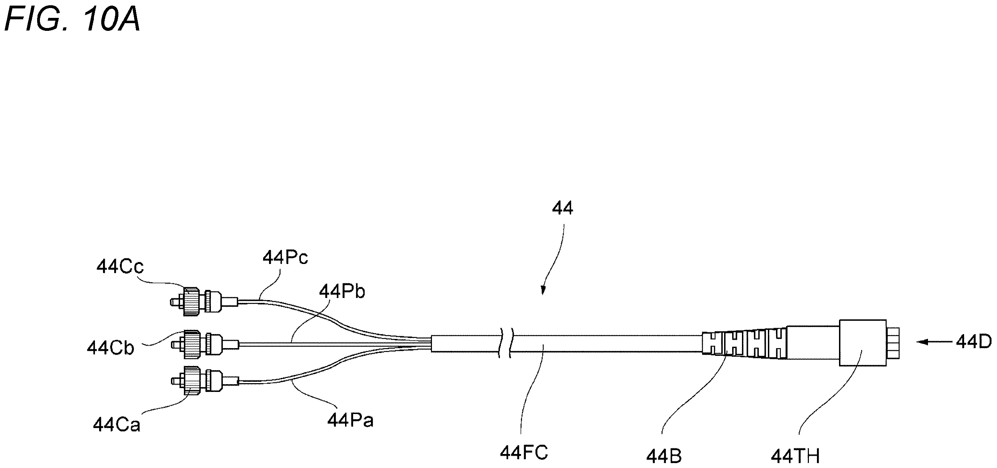

Fig. 10A is a diagram illustrating a specific example of the configuration of the fiber optic cable according to the present disclosure. Fig. 10A illustrates a schematic view of the fiber optic cable 44 as this example.

The fiber optic cable 44 is formed by bundling, for example, three optical fibers 44Pa, 44Pb, 44Pc each covered with a resin loose tube having a diameter of about 0.9 mm. Note that the number of optical fibers included in the fiber optic cable 44 is not limited to three illustrated in Fig. 6C, and may be two or four or more.

At least one of the optical fibers 44Pa, 44Pb, 44Pc may be configured as a light projecting channel for projecting measurement light with which a measurement target is irradiated. In addition, at least two of the optical fibers 44Pa, 44Pb, 44Pc may be configured as a light receiving channel for receiving the measurement light projected by the light projecting channel and reflected by the measurement target.

Fiber cable (FC) connectors 44Ca, 44Cb, 44Cc for connecting to other devices such as the controller 30 are provided at the respective ends of the optical fibers 44Pa, 44Pb, 44Pc.

The three optical fibers 44Pa, 44Pb, 44Pc are collectively inserted into, for example, a fiber cable 44FC made of polyvinyl chloride (PVC) having a diameter of about 30 mm. The three optical fibers 44Pa, 44Pb, 44Pc are accommodated in an aluminum housing 44TH provided adjacent to the fiber cable 44FC via a rubber boot 44B. The aluminum housing 44TH is connected to another device such as the sensor head 20, for example.

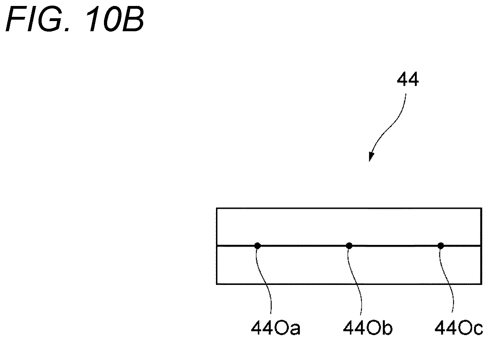

Fig. 10B is a diagram illustrating an example of a schematic view of the end of the fiber optic cable 44 as viewed from an arrow 44D illustrated in Fig. 10A. As illustrated in Fig. 10B, ends 44Oa, 44Ob, 44Oc of the three optical fibers 44Pa, 44Pb, 44Pc are formed at the end of the fiber optic cable 44. Each of the three optical fibers 44Pa, 44Pb, 44Pc may be formed, for example, by being sandwiched and secured by two base portions made of glass or the like in the aluminum housing 44TH. The ends 44Oa, 44Ob, 44Oc correspond, for example, to the ends 42Oa, 42Ob, 42Oc illustrated in Fig. 5A, respectively. The ends 44Oa, 44Ob, 44Oc may be configured as partial reflectors for generating reference light.

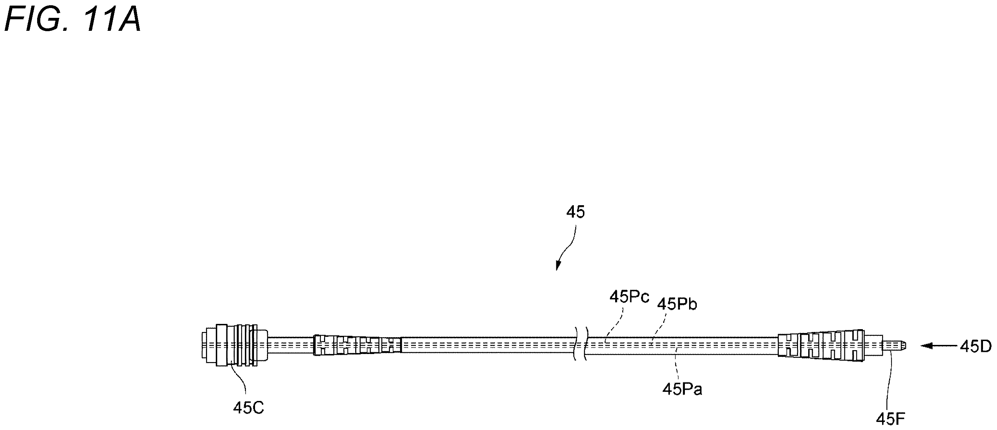

Fig. 11A is a diagram illustrating another specific example of the configuration of the fiber optic cable according to the present disclosure. Fig. 11A illustrates a schematic view of the fiber optic cable 45 as this example.

The fiber optic cable 45 is formed of optical paths 45Pa, 45Pb, 45Pc as three cores inside a clad of one optical fiber. Note that the number of optical paths (cores) included in the fiber optic cable 45 is not limited to three illustrated in Fig. 11A, and may be two or four or more.

At least one of the optical paths 45Pa, 45Pb, 45Pc may be configured as a light projecting channel for projecting measurement light with which a measurement target is irradiated. In addition, at least two of the optical paths 45Pa, 45Pb, 45Pc may be configured as a light receiving channel for receiving the measurement light projected by the light projecting channel and reflected by the measurement target.

At one end of the fiber optic cable 45, for example, a multi-fiber push on (MPO) connector 45C for connecting to another device such as the controller 30 is provided. At the other end of the fiber optic cable 45, for example, a ferrule 45F for connecting to another device such as the sensor head 20 is provided.

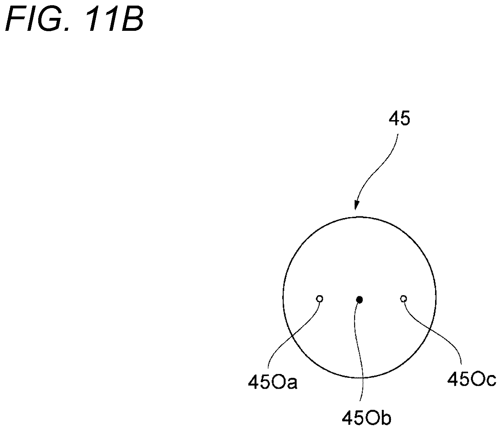

Fig. 11B is a view illustrating an example of a schematic view of the end of the fiber optic cable 45 as viewed from an arrow 45D illustrated in Fig. 11A. As illustrated in Fig. 11B, ends 45Oa, 45Ob, 45Oc of the three optical paths 45Pa, 45Pb, 45Pc are formed at the end of the fiber optic cable 45. The ends 45Oa, 45Ob, 45Oc correspond, for example, to the ends 42Oa, 42Ob, 42Oc illustrated in Fig. 5A, respectively. The ends 45Oa, 45Ob, 45Oc may be configured as partial reflectors for generating reference light.

The embodiment described above is intended to facilitate understanding of the present invention, and is not intended to limit the present invention. Each element included in the embodiment and the arrangement, material, condition, shape, size, and the like thereof are not limited to those exemplified, and can be changed as appropriate. It is possible to partially replace or combine the configurations shown in different embodiments.

DESCRIPTION OF SYMBOLS

1 sensor system
10 displacement sensor
10A main interferometer
10B sub-interferometer
11 control device
12 control signal input sensor
13 external connection device
20 sensor head
21 objective lens

22a to 22c collimator lens
23 lens holder
24a, 24c light shielding plate
25 reference light generation element
26 reflective surface
30 controller
31 display
32 setting unit
33 external interface (I/F)
33 external I/F
34 fiber optic cable junction
35 external storage
36 measurement processing unit
40 fiber optic cable
41P optical fiber
41Pa to 41Pc optical fiber
42Ia, 42Ib, 42Icend
42Oa, 42Ob end
42Oa end
42Ob end
42Oc end
42P, 42Pa to 42Pc optical fiber
43Ia to 43Ic end
43Oa to 43Oc end
43Pa to 43Pc optical fiber
44 fiber optic cable
44B rubber boot
44Ca, 44Cb connector
44FC fiber cable
44Oa, 44Ob end
44Pa, 44Pb optical fiber
44Pa, 44Pb end
44TH aluminum housing
45 fiber optic cable
45C MPO connector
45F ferrule
45Oa, 45Ob end
45Pa, 45Pb optical path
51 wavelength-swept light source
52 optical amplifier
53 isolator
54, 54b, 54h, 54i, 54j optical coupler
54, 54a to 54e optical coupler
54f, 54g optical coupler
54h, 54i and 54j optical coupler
56a to 56c light receiving element
57a to 57c amplifier circuit
58a to 58c AD converter
58a AD converter
58b AD converter
58c AD converter
59 processing unit
60 balance detector
61 correction signal generator
62a to 62c optical coupler
71a to 71e light receiving element
74a to 74c AD converter
75 processing unit

76 differential amplifier circuit
77 correction signal generator
T measurement target

## Claims

1. An optical interference ranging sensor (10) comprising:

   a light source (51) configured to project light while changing a wavelength;
   an interferometer (10A) that is supplied with light projected from the light source (51), and is configured to generate interference light based on measurement light that is illuminated onto a measurement target (T) by a sensor head (20) and reflected, and reference light that follows an optical path at least partially different from an optical path of the measurement light;
   a light receiver (56a to 56c) configured to receive the interference light from the interferometer (10A) and convert the interference light into an electric signal; and
   a processing unit (59) configured to calculate a distance from the sensor head (20) to the measurement target (T) on a basis of the electric signal,
   wherein
   the interferometer (10A) comprises a light projecting channel configured to propagate light supplied from the light source (51) toward the sensor head (20) and irradiate the measurement target (T) with the light from the sensor head (20), and a plurality of light receiving channels configured to receive the measurement light reflected by the measurement target (T) and propagate the measurement light toward the light receiver (56a to 56c), and
   at least one of the light projecting channel and the plurality of light receiving channels further propagates the reference light.

2. The optical interference ranging sensor (10) according to claim 1, further comprising a reference light generator (42Ob) configured to generate the reference light by reflecting a part of the light propagating in the light projecting channel.

3. The optical interference ranging sensor (10) according to claim 2, wherein the reference light generator (42Ob) is configured to propagate the reference light in the light projecting channel toward the light receiver (56a to 56c).

4. The optical interference ranging sensor according to claim 3, wherein the reference light generator (42Ob) is a partial reflector provided in an optical path of the light in the light projecting channel.

5.  The optical interference ranging sensor (10) according to claim 2, wherein the reference light generator (42Oa, 42Oc) is configured to propagate the reference light toward the light receiver (56a to 56c) in at least one of the plurality of light receiving channels.

6.  The optical interference ranging sensor (10) according to claim 5, wherein the reference light generator (26) is a reflective surface that is provided in an optical path of the light in the light projecting channel and reflects the light propagating in the light projecting channel toward one of the light receiving channels.

7.  The optical interference ranging sensor (10) according to claim 1, wherein

    at least one of the plurality of light receiving channels is further configured to propagate the light supplied from the light source (51) toward the sensor head (20), and
    the optical interference ranging sensor (10) further comprises a reference light generator (42Oa, 42Oc) configured to generate the reference light by reflecting a part of the light propagating in the at least one of the light receiving channels.

8.  The optical interference ranging sensor (10) according to claim 7, wherein the reference light generator (42Oa, 42Oc) is a partial reflector provided in an optical path of the light in the at least one of the light receiving channels.

9.  The optical interference ranging sensor (10) according to claim 7, wherein the at least one of the light receiving channels comprises a light shield (24a, 24c) that shields at least a part of the light supplied from the light source (51) and propagating toward the sensor head (20).

10. The optical interference ranging sensor (10) according to claim 1, wherein at least one of the light projecting channel and the plurality of light receiving channels includes an optical fiber for propagating the measurement light and the reference light.

11. The optical interference ranging sensor (10) according to claim 1, wherein at least one of the light projecting channel and the plurality of light receiving channels includes a first optical fiber for propagating the measurement light and a second optical fiber for propagating the reference light.

*FIG. 1*

EP 4 534 950 A1

## FIG. 2

```
        ┌─────────────┐
        │    START    │
        └─────────────┘
               │
               ▼
   ┌───────────────────────┐
   │   Install sensor head │ ─────── S11
   └───────────────────────┘
               │
               ▼
   ┌───────────────────────┐
   │   Set measurement     │ ─────── S12
   │   conditions          │
   └───────────────────────┘
               │
               ▼
   ┌───────────────────────┐
   │       Measure         │ ─────── S13
   └───────────────────────┘
               │
               ▼
   ┌───────────────────────┐
   │  Output measurement   │ ─────── S14
   │      result           │
   └───────────────────────┘
               │
               ▼
        ┌─────────────┐
        │     END     │
        └─────────────┘
```

# FIG. 3

Sensor system 1

10

11

12

| Displacement sensor | Control device (PLC) | Control signal input sensor |

External connection device (PC)

13

*FIG. 4*

```
         ┌─────────────┐
         │    START    │
         └─────────────┘
                │
                ▼
        ┌─────────────────┐
        │Detect measurement│ ～～ S21
        │     target      │
        └─────────────────┘
                │
                ▼
        ┌─────────────────┐
        │Instruct displacement│ ～～ S22
        │ sensor to measure │
        └─────────────────┘
                │
                ▼
        ┌─────────────────┐
        │  Measure with   │ ～～ S23
        │displacement sensor│
        └─────────────────┘
                │
                ▼
        ┌─────────────────┐
        │Output measurement│ ～～ S24
        │     result      │
        └─────────────────┘
                │
                ▼
         ┌─────────────┐
         │     END     │
         └─────────────┘
```

FIG. 5A

Displacement sensor 10

Fiber optic cable 40

Measurement target T

Controller 30

Main interferometer 10A

Sensor head 20

Sub-interferometer 10B

Correction signal generator

---------- Electric signal
—————— Optical signal

EP 4 534 950 A1

**FIG. 5B**

Displacement sensor **10**

Measurement target T

Fiber optic cable **40**

Main interferometer **10A**

Sensor head **20**

Controller **30**

Processing unit **59**

AD converter **58c** — Amplifier circuit **57c** — Light receiving element **56c**

62c **42lc** 42Oc 22c 24c 21
42Pc

62b **42lb** 42Ob 22b
42Pb

AD converter **58a** — Amplifier circuit **57a** — Light receiving element **56a**

62a **42la** 42Oa 22a
42Pa 24a

Wavelength-swept light source **51** — Optical amplifier **52** — **53** — **54**

**60**

Correction signal generator **61**

**54d** **54e**

Sub-interferometer **10B**

- - - - - - - Electric signal
——— Optical signal

EP 4 534 950 A1

# FIG. 5C

Displacement sensor 10

Controller 30

Measurement target T

Fiber optic cable 40

Main interferometer 10A

Sensor head 20

59

Processing unit

58c — AD converter
57c — Amplifier circuit
56c — Light receiving element
62c — 42Ic
42Oc
42Pc

58a — AD converter
57a — Amplifier circuit
56a — Light receiving element
62b — 42Ib
42Ob
42Pb

62a — 42Ia
42Oa
42Pa

25
21
26
26

Wavelength-swept light source 51

Optical amplifier 52

53

54

60

Correction signal generator 61

54d

54e

Sub-interferometer 10B

- - - - - - - Electric signal
————— Optical signal

EP 4 534 950 A1

FIG. 5D

## FIG. 6A

Sensor head 20

23

21

## FIG. 6B

23

22c

22b

22a

21

40

*FIG. 7*

EP 4 534 950 A1

## FIG. 8

```
              START

               FFT            ～ S31

          Convert distance    ～ S32

           Detect peak        ～ S33

             Average          ～ S34

               END
```

## FIG. 9A

FFT

f(t)

Voltage

Time

→

F(ω)

Voltage

Frequency

## FIG. 9B

Distance conversion

## FIG. 9C

Peak detection

# FIG. 10A

## FIG. 10B

FIG. 11A

FIG. 11B

45

45Oa

45Ob

45Oc

Europäisches
Patentamt

European
Patent Office

Office européen
des brevets

# EUROPEAN SEARCH REPORT

**Application Number**

EP 24 20 3918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 242 579 A1 (OMRON TATEISI ELECTRONICS CO [JP]) 13 September 2023 (2023-09-13)<br>* abstract; figure 5A *<br>* paragraphs [0002], [0076] - paragraph [0077] *<br>* paragraph [0082] - paragraph [0084] * | 1-8,10, 11 | INV.<br>G01B9/02004<br>G01B9/02015<br>G01B9/02056<br>G01B11/02 |
| X | US 2006/109478 A1 (TEARNEY GUILLERMO J [US] ET AL) 25 May 2006 (2006-05-25)<br>* abstract; figures 5,8 *<br>* paragraphs [0013], [0031], [0038] - paragraph [0039] * | 1-3,5-7, 9-11 | |
| X,P | WO 2024/070358 A1 (OMRON TATEISI ELECTRONICS CO [JP])<br>4 April 2024 (2024-04-04)<br>* the whole document * | 1,10,11 | |

**TECHNICAL FIELDS SEARCHED (IPC)**

G01B

The present search report has been drawn up for all claims

| Place of search | Date of completion of the search | Examiner |
|---|---|---|
| Munich | 18 February 2025 | Stanciu, C |

EPO FORM 1503 03.82 (P04C01)

## ANNEX TO THE EUROPEAN SEARCH REPORT
## ON EUROPEAN PATENT APPLICATION NO.

EP 24 20 3918

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | Publication date | Patent family member(s) | | Publication date |
|---|---|---|---|---|---|
| EP 4242579 | A1 | 13-09-2023 | CN | 116736320 A | 12-09-2023 |
| | | | EP | 4242579 A1 | 13-09-2023 |
| | | | JP | 2023132738 A | 22-09-2023 |
| | | | US | 2023314122 A1 | 05-10-2023 |
| US 2006109478 | A1 | 25-05-2006 | EP | 1825214 A1 | 29-08-2007 |
| | | | EP | 2278265 A2 | 26-01-2011 |
| | | | EP | 2278266 A2 | 26-01-2011 |
| | | | EP | 2278267 A2 | 26-01-2011 |
| | | | US | 2006109478 A1 | 25-05-2006 |
| | | | WO | 2006058049 A1 | 01-06-2006 |
| WO 2024070358 | A1 | 04-04-2024 | JP | 2024048644 A | 09-04-2024 |
| | | | WO | 2024070358 A1 | 04-04-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2023173505 A